# EUROPÄISCHE PATENTSCHRIFT

(11) **EP 0 962 740 B1**
(45) Veröffentlichungstag und Bekanntmachung des Hinweises auf die Patenterteilung: **16.02.2005**
(21) Anmeldenummer: 99110593.3
(22) Anmeldetag: 01.06.1999
(51) Int. Cl.: F41G 7/22

(54) **Zielsuchkopf und Verfahren zur Zielerkennung- und Verfolgung mittels des Zielsuchkopfes**
Target seeker head and method of target recognition and tracking by means of the target seeker head
Autodirecteur et procédé de reconnaissance et de poursuite de cible au moyen de l'autodirecteur

(30) Priorität: 04.06.1998 DE 19824899
(43) Veröffentlichungstag der Anmeldung: 08.12.1999
(73) Patentinhaber: LFK Lenkflugkörpersysteme GmbH, 81663 München (DE)
(72) Erfinder: Seiferth, Reinhard, 82327 Traubing (DE); Popp, Lothar, 85551 Kirchheim (DE); Lenz, Rüdiger, Dr., 83607 Holzkirchen (DE); Riedl, Günther, 82544 Egling (DE); Hetzer, Walter, 85630 Grasbrunn (DE); Keller, Erwin, 82041 Oberhaching (DE); Frei, Klaus, 88263 Horgenzell (DE); Fendt, Alfred, Dr., 81479 München (DE)
(74) Vertreter: Hummel, Adam

(56) Entgegenhaltungen:
- DE-B- 2 454 480
- DE-C- 2 932 468
- US-A- 4 396 878

## Beschreibung

Der Erfindung betrifft einen Infrarot - Zielsuchkopf für einen Flugkörper nach dem Oberbegriff des Anspruchs 1 und ein Verfahren zu dessen Verwendung zum Zweck der Zielerkennung- und -verfolgung nach dem Oberbegriff des Anspruchs 11.

Infrarot - Zielsuchköpfe sind bekannt. Sie werden eingesetzt, um Flugkörper auf Ziele zu lenken, wobei die von einem Ziel abgestrahlte Wärmeenergie erfasst wird.

Herkömmliche Suchköpfe funktionieren mit freien Kreiseln zur Stabilisierung, mit doppelten orthogonalen Kardanrahmen oder mit Spiegelsystemen. Freie Kreisel sind hauptsächlich für Modulationsscheiben-Suchköpfe mit einigen wenigen Detektoren geeignet, für Suchköpfe mit großflächigen Mosaikdetektoren werden sie dagegen kompliziert und voluminös. Dasselbe gilt für orthogonale Kardanrahmen, die außerdem bei schnell rollenden Flugkörpern eine zusätzliche Rollstabilisierung benötigen. Ähnlich sind die Verhältnisse bei Spiegelsystemen.

Ebenfalls bekannt sind polare Rahmensysteme nach Art von Theodolithen oder astronomischen Observatorien. Sie ermöglichen die Verwendung einfacher Mechanik, die sehr klein ausgeführt werden kann, und übernehmen die Rollstabilisierung mit. Sie weisen jedoch eine Singularität auf, wenn die Suchkopfachse mit der Flugkörperachse zusammenfällt: Hierbei wird vom Rollantrieb eine unendliche Beschleunigung gefordert, um endliche Richtbewegungen auszuführen. Diese Eigenschaft hat der Anwendung derartiger Systeme bis jetzt Grenzen gesetzt.

Aus der DE 2454480 ist ein Zielsuchkopf bekannt, der die von einem Flugobjekt abgestrahlte Wärmeenergie mittels eines mit einem Umlenkspiegel und einem Eingangsobjektiv versehenen Aufnahmekopfes detektiert, wobei für die unterschiedlichen Rotations- und Kippbewegungen Winkelgeber und Motoren vorgesehen sind.

Ebenfalls ist aus der US 4,637,571 ein Verfahren zur elektronischen Bildstabilisierung bekannt, wobei die von einem Kreisel generierten Signale für die Bewegung des Flugkörpers die Eingangsgrößen eines elektronischen Bidstabilisierungsverfahrens sind.

Das Dokument US-A-4 396 878 offenbart ein ähnliches System, bei dem neben der Winkelposition auch die Drehrate um die beiden Achsen mittels Sensoren gemessen wird und eine Regelschleife die Motoren derart steuert, daß das Verfolgungsgerät dem Ziel nachgeführt wird und die Schwenkachse von den Winkelbewegungen des Flugkörpers entkoppelt ist.

Ferner ist aus DE 29 32 468 C ein Suchkopf bekannt, bei dem auf elektronischem Wege durch ein Bildverarbeitungssystem durch Auswertung aufeinanderfolgender Bilder der aufgrund der vorab ermittelten Sichtliniengeschwindigkeit zu erwartende nächste Ort des Zieles im Gesichtsfeld bestimmt wird. Dies dient dazu, vorübergehend verlorengegangene Ziele wiederzufunden und von Scheinzielen zu unterscheiden.

Der vorliegenden Erfindung liegt die Aufgabe zugrunde, einen Infrarot - Zielsuchkopf nach Art eines Theodolithen oder eines astronomischen Observatoriums vorzuschlagen (polares Rahmensystem), bei dem die Probleme der oben erwähnten Singularität soweit wie möglich umgangen werden. Die Entwicklung eines entsprechenden Verfahrens zur Zielverfolgung ist ebenfalls ein Ziel der Erfindung.

Zusätzlich soll der Infrarot - Zielsuchkopf mechanisch möglichst klein und einfach ausgebildet sein, einen großen gewünschten Raumwinkel ansteuern können und jede vom Flugkörper induzierte Winkelgeschwindigkeit möglichst gut abbauen.

Darüber hinaus sollen der Infrarot - Zielsuchkopf und das entsprechende Verfahren mit Fehlerkorrekturfunktionen versehen sein, um somit eine möglichst hohe Zuverlässigkeit aufzuweisen.

Diese Aufgabe ist gemäß der Erfindung für einen Zielsuchkopf durch die Merkmale des Patentanspruchs 1 gelöst, für eine Vorrichtung zur Durchführung des Verfahrens durch die Merkmale des Patentanspruchs 11; vorteilhafte Ausgestaltungen sind in den Unteransprüchen beschrieben.

Dementsprechend wird vorgeschlagen, den erfindungsgemäßen Infrarot - Zielsuchkopf mit einem polaren Rahmensystem zu versehen, wobei an der Drehachse des Rollrahmens und an der Schwenkachse rotierende oder vibrierende Drehratensensoren sowie Winkelgeber und Motoren angebracht sind.

An der Schwenkachse sind dabei Drehratensensoren für die Messung der inertialen Drehrate um die Schwenkachse und senkrecht dazu angebracht. Analog dazu ist an der Rollachse ein Drehratensensor für die inertiale Drehrate des Rollrahmens angebracht. Der Vorteil dieser Konstruktion liegt darin, dass mit Hilfe dieser Drehratensensoren Geschwindigkeitsregelschleifen und -steuerschleifen aufgebaut werden, welche die Motoren der Schwenkachse und des Rollrahmens derart ansteuern, dass die Kameraachse innerhalb eines zur Flugkörperlängsachse symmetrischen Raumwinkels auf jede Richtung eingestellt werden kann und dass sie von allen Winkelbewegungen des Flugkörpers soweit entkoppelt ist, dass die Bewegung des Zielbildes in der Bildebene des Kameraobjektivs innerhalb der Belichtungszeit der Kamera vernachlässigbar klein bleibt.

Die Signale der Drehratensensoren am Rollrahmen und an der Kamera können derart kombiniert werden, dass getrennte Roll-, Nick- und Gierraten für die optische Achse zur Verfügung stehen.

Als Detektor wird ein Mosaik-Infrarotdetektor verwendet, dessen Ausgangssignale in einen Bildverarbeitungsrechner eingespeist werden.

Der Bildverarbeitungsrechner ist auf dem Rollrahmen untergebracht, um einen möglichst einfachen Schleifring zwischen Rollrahmen und Flugkörper einsetzen zu können. Der Bildverarbeitungsrechner kann mit Hilfe geeigneter Algorithmen, z. B. anhand von Histogrammen, die Belichtungszeit des Mosaikdetektors auf geeignete Werte einstellen, so dass Stabilisierungs-Restfehler zu möglichst kleinen Verwischungen des Bildes führen.

Aus dem Signal der Drehratensensoren und der Winkelgeber wird die Winkellage der Kameraachse ermittelt und dem Bildverarbeitungsrechner mitgeteilt, so dass nicht ausstabilisierte Winkelbewegungen der optischen Achse elektronisch ausgeglichen bzw. bei der Bildung der Zielkoordinaten berücksichtigt werden können.

Um die Auswirkungen der oben genannten Singularität zu vermeiden, wird vorgeschlagen, die Suchkopfachse dem Ziel nicht mehr nachzuführen, sobald die Flugkörper-Längsachse mit der Verbindungsgeraden Flugkörper-Ziel einen so kleinen Winkel bildet, dass das Ziel bei Schwenkrahmen-Auslenkung Null innerhalb des Bildfeldes der Kamera mit genügendem Abstand zum Bildfeldrand abgebildet wird. Erfindungsgemäß wird in diesem Fall der Rollrahmen so gedreht, dass die Schwenkrahmenachse senkrecht zum momentanen größten Winkelgeschwindigkeitsvektor steht, der auf den Suchkopf wirkt.

Fehlerhafte Stellen auf dem Mosaikdetektor, die von Fertigungsfehlern, Alterung oder feindlichen Zerstöreinwirkungen stammen, werden im Bildverarbeitungsrechner ermittelt oder ihm mitgeteilt und anschliessend gespeichert, so dass durch geeignete Einstellung der Rahmenwinkel das Zielbild von diesen Stellen ferngehalten werden kann.

Eine vorteilhafte Ausgestaltung der Erfindung sieht vor, dass ein katadioptrisches Objektiv mit Zwischenabbildung verwendet wird, welches die Austrittspupille, die in der Kaltblende des Detektors liegt, in die Nähe der Eintrittslinse transformiert und in dessen Zwischenbildebene ein Laserschutzfilter, z. B. mit Vanadiumoxidschichten, oder ein elektrochromes Filter angebracht ist.

Zudem sieht eine vorteilhafte Weiterbildung vor, die Eigenstrahlung aus dem durch den Subreflektor des katadioptrischen Objektivs blockierten Raumwinkel vom Detektor fernzuhalten. Dies erfolgt erfindungsgemäß durch die Verwendung einer kreisringförmigen Kaltblende vor dem Detektor. Die zentrale Abdeckung dieser Blende wird vorzugsweise als absorbierende Beschichtung auf dem Kaltfilter des Detektors realisiert.

Zur Kühlgasversorgung des Detektors kann eine toroidförmige Druckgasflasche auf dem Rollrahmen angeordnet sein.

Im Rahmen einer weiteren bevorzugten Ausführungsform der vorliegenden Erfindung ist zur Verbesserung der mechanischen Stabilisierung vorgesehen, die Lager der Kamera-Schwenkachse parallel zur Achse des Rollrahmens beweglich mit Winkel- und Längenausgleich zu befestigen und daran mechanische Aktuatoren anzubringen, die eine Winkelbewegung der Achse senkrecht zur Schwenkachse bewirken.

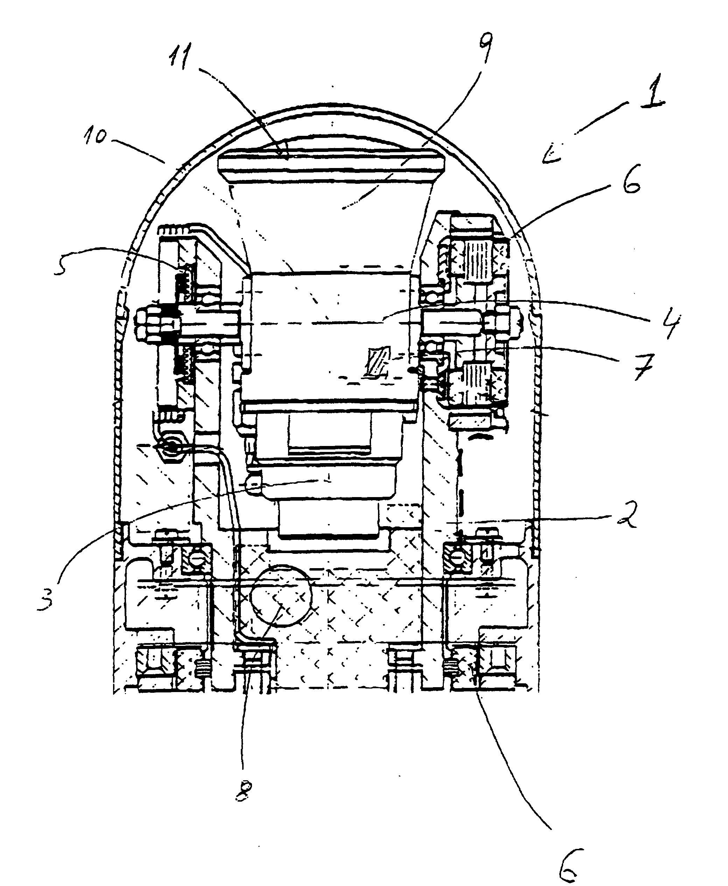

Die Erfindung ist im folgenden anhand der einzigen Figur näher erläutert, die eine schematische Darstellung des Aufbaus des erfindungsgemäßen Zielsuchkopfes ist, wobei nur die für das Verständnis der Erfindung wesentlichen Teile mit Bezugszeichen versehen sind.

Der erfindungsgemäße Zielsuchkopf 1 enthält einen Rollrahmen 2, dessen Drehachse 3 mit der Flugkörper-Längsachse zusammenfällt. Desweiteren enthält der Zielsuchkopf 1 eine schwenkbare Kamera 11, wobei die Kamera-Schwenkachse 4 senkrecht zur Drehachse 3 des Rollrahmens 2 angeordnet ist. An beiden Achsen sind Winkelgeber 5 und Motoren 6 sowie Drehratensensoren 7, 8 angebracht.

Die Lager der Schwenkachse 4 können parallel zur Achse des Rollrahmens 2 beweglich mit Winkel- und Längenausgleich befestigt sein, wobei daran angebrachte mechanische Aktuatoren eine Winkelbewegung der Achse des Rollrahmens 2 senkrecht zur Schwenkachse 4 bewirken.

Die an der Schwenkachse 4 angebrachten Drehratensensoren 7 messen die Drehrate um die Schwenkachse 4 und senkrecht dazu während der am Rollrahmen 2 angebrachte Drehratensensor 8 die Drehrate des Rollrahmens 2 erfasst. Auf den Daten dieser Drehratensensoren 7, 8 basierend werden Geschwindigkeitsregelschleifen und -steuerschleifen aufgebaut, welche die Motoren 6 der Schwenkachse 4 und des Rollrahmens 2 so ansteuern, dass die Schwenkachse 4 innerhalb eines zur Flugkörperlängsachse symmetrischen Raumwinkels auf jede Richtung einstellbar ist und dass sie von allen Winkelbewegungen des Flugkörpers soweit entkoppelt ist, dass die Bewegung des Zielbildes in der Bildebene des Kameraobjektivs innerhalb der Belichtungszeit der Kamera 11 vernachlässigbar klein bleibt.

Als Detektor wird ein Mosaik-Infrarotdetektor 9 eingesetzt. Die Ausgangssignale des Mosaik-Infrarotdetektors 9 werden in einen bildverarbeitenden Rechner eingespeist.

Der bildverarbeitende Rechner ist auf dem Rollrahmen 2 untergebracht, so dass ein möglichst einfacher Schleifring zwischen Rollrahmen 2 und Flugkörper einsetzbar ist.

Weiterhin enthält der Zielsuchkopf 1 ein katadioptrisches Objektiv 10 mit Zwischenabbildung, wobei die Austrittspupille, die in der Kaltblende des Detektors 9 liegt, in die Nähe der Eintrittslinse transformiert wird. In der Zwischenbildebene sind ein Laserschutzfilter, z.B. mit Vanadiumoxidschichten, oder ein elektrochromes Filter angebracht.

Im Rahmen einer weiteren Ausführungsform der vorliegenden Erfindung wird die Eigenstrahlung aus dem durch den Subreflektor des katadioptrischen Objektivs 10 blockierten Raumwinkel vom Detektor 9 dadurch ferngehalten, dass eine kreisringförmige Kaltblende vor dem Detektor verwendet wird. Die zentrale Abdeckung dieser Blende wird vorzugsweise als absorbierende Beschichtung auf dem Kaltfilter des Detektors 9 ausgebildet.

Erfindungsgemäß wird die Suchkopfachse dem Ziel nicht mehr nachgeführt, wenn die Flugkörper-Längsachse mit der Verbindungsgeraden Flugkörper-Ziel einen so kleinen Winkel bildet, dass das Ziel bei Schwenkrahmen-Auslenkung Null innerhalb des Bildfeldes der Kamera mit genügendem Abstand zum Bildfeldrand abgebildet wird. In diesem Betriebszustand wird der Rollrahmen 2 so gedreht, dass die Schwenkrahmenachse 4 senkrecht zum momentanen größten Winkelgeschwindigkeitvektor steht, der auf den Suchkopf 1 wirkt.

Der bildverarbeitende Rechner kann mit Hilfe geeigneter Algorithmen, z. B. anhand von Histogrammen, die Belichtungszeit des Mosaikdetektors 9 auf geeignete Werte einstellen.

Im Rahmen der Erfindung ist vorgesehen, dass die Algorithmik des bildverarbeitenden Rechners tolerant gegenüber Bildrotation ist. Dies kann z.B. dadurch realisierbar sein, dass nach einer Segmentierung des Bildinhalts die Weiterverarbeitung an symbolischen Merkmalen durchführbar ist.

## Patentansprüche

1. Infrarot-Zielsuchkopf (1) für einen Flugkörper mit einem polaren Rahmensystem nach Art eines astronomischen Observatoriums oder eines Theodolithen, bei dem die Drehachse (3) des Rollrahmens (2) mit der Flugkörper-Längsachse zusammenfällt und die Kamera-Schwenkachse (4) senkrecht dazu angeordnet ist, wobei an der Drehachse (3) des Rollrahmens (2) und an der Schwenkachse (4) Winkelgeber (5) und Motoren (6) und an der Schwenkachse Drehratensensoren (7) für die Messung der inertialen Drehrate um die Schwenkachse (4) und senkrecht dazu und ferner am Rollrahmen (2) ein Drehratensensor (8) für die inertiale Drehrate des Rollrahmens (2) angebracht ist und wobei mit Hilfe dieser Drehratensensoren (7, 8) Geschwindigkeitsregelschleifen und -steuerschleifen aufbaubar sind, die die Motoren der Schwenkachse (4) und des Rollrahmens (2) so ansteuern, dass die Schwenkachse (4) innerhalb eines zur Flugkörperlängsachse symmetrischen Raumwinkels auf jede Richtung einstellbar ist und dass sie von allen Winkelbewegungen des Flugkörpers soweit entkoppelt ist dass die Bewegung des Zielbildes in der Bildebene des Kameraobjektivs innerhalb der Belichtungszeit der Kamera (11) vernachlässigbar klein bleibt, **dadurch gekennzeichnet, daß**
ein Mosaik-Infrarotdetektor (9) vorgesehen ist, dessen Ausgangssignale in einen bildverarbeitenden Rechner einspeisbar sind,
daß aus dem Signal der Drehratensensoren (7, 8) und der Winkelgeber (5) die Winkellage der Schwenkachse (4) ermittelbar ist, so dass nicht ausstabilisierte Winkelbewegungen der optischen Achse elektronisch ausgeglichen bzw. bei der Bildung der Zielkoordinaten berücksichtigt werden,
dass die Suchkopfachse dem Ziel nicht mehr nachgeführt wird, sobald die Flugkörper-Längsachse mit der Verbindungsgeraden Flugkörper-Ziel einen so kleinen Winkel bildet, dass das Ziel bei Schwenkrahmen-Auslenkung Null innerhalb des Bildfeldes der Kamera (11) mit genügendem Abstand zum Bildfeldrand abbildbar ist und
dass in diesem Betriebszustand der Rollrahmen (2) so drehbar ist, dass die Schwenkrahmenachse (4) senkrecht zum momentanen größten Winkelgeschwindigkeitsvektor steht, der auf den Suchkopf (1) wirkt.

2. Infrarot-Zielsuchkopf (1) nach Anspruch 1, **dadurch gekennzeichnet, dass** fehlerhafte Stellen auf dem Mosaikdetektor (9), die von Fertigungsfehlern, Alterung oder feindlichen Zerstöreinwirkungen stammen, im bildverarbeitenden Rechner ermittelbar und/oder speicherbar sind, so dass durch geeignete Einstellung der Schwenkwinkel das Zielbild von diesen Stellen ferngehalten werden kann.

3. Infrarot-Zielsuchkopf (1) nach Anspruch 1 oder 2, **dadurch gekennzeichnet, dass** ein katadioptrisches Objektiv (10) mit Zwischenabbildung vorgesehen ist, dass die Austrittspupille, die in der Kaltblende des Detektors liegt, in die Nähe der Eintrittslinse transformierbar ist und dass in dessen Zwischenbildebene ein Laserschutzfilter, z. B. mit Vanadiumoxidschichten, oder ein elektrochromes Filter angebracht ist.

4. Infrarot-Zielsuchkopf (1) nach Anspruch 3, **dadurch gekennzeichnet, dass** die Eigenstrahlung aus dem durch den Subreflektor des katadioptrischen Objektivs (10) blockierten Raumwinkel dadurch vom Detektor (9) ferngehalten wird, dass eine kreisringförmige Kaltblende vor dem Detektor (9) angebracht ist.

5. Infrarot-Zielsuchkopf (1) nach Anspruch 4, **dadurch gekennzeichnet, dass** die zentrale Abdeckung der Kaltblende als absorbierende Beschichtung auf dem Kaltfilter des Detektors (9) ausgebildet ist.

6. Infrarot-Zielsuchkopf (1) nach einem der vorangehenden Ansprüche, **dadurch gekennzeichnet, dass** die Signale der Drehratensensoren (7, 8) am Rollrahmen (2) und an der Kamera derart kombinierbar sind, dass getrennte Roll-, Nick- und Gierraten für die optische Achse zur Verfügung stehen.

7. Infrarot-Zielsuchkopf (1) nach einem der vorangehenden Ansprüche, **dadurch gekennzeichnet, dass** der bildverarbeitende Rechner auf dem Rollrahmen (2) untergebracht ist, so dass ein einfacher Schleifring zwischen Rollrahmen (2) und Flugkörper einsetzbar ist.

8. Infrarot-Zielsuchkopf (1) nach einem der vorangehenden Ansprüche, **dadurch gekennzeichnet, dass** die Lager der Schwenkachse (4) parallel zur Achse des Rollrahmens (2) beweglich mit Winkel- und Längenausgleich befestigt sind und dass an ihnen Motoren angebracht sind, die eine Winkelbewegung der Basisachse senkrecht zur Schwenkachse (4) bewirken.

9. Infrarot-Zielsuchkopf (1) nach einem der vorangehenden Ansprüche, **dadurch gekennzeichnet, dass** zur Kühlgasversorgung des Detektors eine toroidförmige Druckgasflasche auf dem Rollrahmen (2) angeordnet ist.

10. Infrarot-Zielsuchkopf (1) nach einem der vorangehenden Ansprüche, **dadurch gekennzeichnet, dass** durch den bildverarbeitenden Rechner mit Hilfe geeigneter Algorithmen, z. B. anhand von Histogrammen, die Belichtungszeit des Mosaikdetektors (9) auf geeignete Werte einstellbar ist.

11. Verfahren zur Zielverfolgung mittels des Zielsuchkopfes nach den Ansprüchen 1 bis 10, bei dem die Drehrate um die Schwenkachse (4) und senkrecht dazu mittels Drehratensensoren (7) und die Drehrate des Rollrahmens (2) mittels Drehratensensoren (8) gemessen wird und Geschwindigkeitsregelschleifen und -steuerschleifen aufgebaut werden, die die Motoren der Schwenkachse (4) und des Rollrahmens (2) so ansteuern, dass die Schwenkachse (4) innerhalb eines zur Flugkörperlängsachse symmetrischen Raumwinkels auf jede Richtung einstellbar ist und dass sie von allen Winkelbewegungen des Flugkörpers soweit entkoppelt wird, dass die Bewegung des Zielbildes in der Bildebene des Kameraobjektivs innerhalb der Belichtungszeit der Kamera (11) vernachlässigbar klein bleibt, **dadurch**
**gekennzeichnet, dass**
ein Mosaik-Infrarotdetektor (9) verwendet wird, der die von einem Ziel abgestrahlte Wärmeenergie erfasst, wobei dessen Ausgangssignale in einen bildverarbeitenden Rechner eingespeist werden,
dass aus dem Signal der Drehratensensoren (7, 8) und der Winkelgeber (5) die Winkellage der Schwenkachse (4) ermittelt wird, so dass nicht ausstabilisierte Winkelbewegungen der optischen Achse elektronisch
ausgeglichen bzw. bei der Bildung der Zielkoordinaten berücksichtigt werden,
dass die Suchkopfachse dem Ziel nicht mehr nachgeführt wird, sobald die Flugkörper-Längsachse mit der Verbindungsgeraden Flugkörper-Ziel einen so kleinen Winkel bildet, dass das Ziel bei Schwenkrahmen-Auslenkung Null innerhalb des Bildfeldes der Kamera mit genügendem Abstand zum Bildfeldrand abgebildet wird und
dass in diesem Betriebszustand der Rollrahmen (2) so gedreht wird, dass die Schwenkrahmenachse (4) senkrecht zum momentanen größten Winkelgeschwindigkeitsvektor steht, der auf den Suchkopf (1) wirkt.

12. Verfahren nach Anspruch 11, **dadurch gekennzeichnet, dass** fehlerhafte Stellen auf dem Mosaikdetektor (9), die von Fertigungsfehlern, Alterung oder feindlichen Zerstöreinwirkungen stammen, im bildverarbeitenden Rechner ermittelt und/oder gespeichert werden, so dass durch geeignete Einstellung der Schwenkwinkel das Zielbild von diesen Stellen ferngehalten wird.

13. Verfahren nach Anspruch 11 oder 12, **dadurch gekennzeichnet, dass** ein katadioptrisches Objektiv (10) mit Zwischenabbildung verwendet wird, wobei die Austrittspupille, die in der Kaltblende des Detektors liegt, in die Nähe der Eintrittslinse transformiert wird und in dessen Zwischenbildebene ein Laserschutzfilter, z. B. mit Vanadiumoxidschichten, oder ein elektrochromes Filter angebracht ist.

14. Verfahren nach Anspruch 13, **dadurch gekennzeichnet, dass** die Eigenstrahlung aus dem durch den Subreflektor des katadioptrischen Objektivs (10) blockierten Raumwinkel durch eine vor dem Detektor (9) angebrachte kreisringförmige Kaltblende vom Detektor (9) ferngehalten wird.

15. Verfahren nach Anspruch 14, **dadurch gekennzeichnet, dass** als zentrale Abdeckung der Kaltblende eine absorbierende Beschichtung auf dem Kaltfilter des Detektors (9) verwendet wird.

16. Verfahren nach einem der Ansprüche 11 bis 15, **dadurch gekennzeichnet, dass** die Signale der Drehratensensoren (7, 8) am Rollrahmen (2) und an der Kamera derart kombiniert werden, dass getrennte Roll-, Nick- und Gierraten für die optische Achse zur Verfügung stehen.

17. Verfahren nach einem der Ansprüche 11 bis 16, **dadurch gekennzeichnet, dass** durch die parallel zur Achse des Rollrahmens (2) beweglich mit Winkel- und Längenausgleich befestigten Lager der Schwenkachse (4) und durch an ihnen angebrachte Motoren eine Winkelbewegung der Basisachse senkrecht zur Schwenkachse (4) bewirkt wird.

18. Verfahren nach einem der Ansprüche 11 bis 17, **dadurch gekennzeichnet, dass** durch den bildverarbeitenden Rechner mit Hilfe geeigneter Algorithmen, z. B. anhand von Histogrammen, die Belichtungszeit des Mosaikdetektors (9) auf geeignete Werte eingestellt wird.

19. Verfahren nach einem der Ansprüche 11 bis 18, **dadurch gekennzeichnet, dass** ein bildverarbeitender Rechners verwendet wird, dessen Algorithmik tolerant gegenüber Bildrotation ist.

20. Verfahren nach Anspruch 19, **dadurch gekennzeichnet, dass** nach einer Segmentierung des Bildinhalts die Weiterverarbeitung auf symbolischer Ebene (Merkmalsebene) durchgeführt wird.

## Claims

1. An infrared target-seeker head (1) for a missile with a polar gimballed system in the manner of an astronomical observatory or a theodolite, in which the axis of rotation (3) of the roll gimbal (2) coincides with the longitudinal axis of the missile, and the swivel axis (4) of the camera is arranged perpendicular thereto, angle transmitters (5) and motors (6) being positioned on the axis of rotation (3) of the roll gimbal (2), and rate-of-rotation sensors (7) for the measurement of the inertial rate of rotation about the swivel axis (4) and perpendicular thereto being positioned on the swivel axis, and furthermore a rate-of-rotation sensor (8) for the inertial rate of rotation of the roll gimbal (2) being positioned on the roll gimbal (2), and closed speed-control loops and open speed-control loops being capable of being set up with the aid of these rate-of-rotation sensors (7, 8), which drive the motors of the swivel axis (4) and of the roll gimbal (2) in such a way that the swivel axis (4) can be adjusted to any direction within a solid angle symmetrical to the longitudinal axis of the missile and in such a way that it is decoupled from all the angular motions of the missile to such an extent that the motion of the target image in the image plane of the camera lens within the exposure-time of the camera (11) remains negligibly slight, **characterised in that**
a mosaic infrared detector (9) is provided, the output signals of which are capable of being fed into an image-processing computer,
**in that** the angular position of the swivel axis (4) is capable of being ascertained from the signal of the rate-of-rotation sensors (7, 8) and of the angle transmitters (5), so that angular motions of the optical axis that are not fully stabilised are compensated electronically or are taken into account in the creation of the target coordinates,
**in that** the seeker-head axis is no longer locked onto the target as soon as the longitudinal axis of the missile forms with the straight line connecting the missile and the target such a small angle that in the case of zero displacement of the swivel gimbal the target is capable of being imaged within the image field of the camera (11) with sufficient spacing from the edge of the image field and
**in that** in this operating state the roll gimbal (2) is capable of being rotated in such a way that the swivel-gimbal axis (4) is perpendicular to the greatest instantaneous angular-velocity vector that is acting on the seeker head (1).

2. Infrared target-seeker head (1) according to Claim 1, **characterised in that** defective points on the mosaic detector (9), which stem from manufacturing errors, from ageing or from destructive effects of enemy action, are capable of being ascertained and/or stored in the image-processing computer, so that the target image can be kept away from these points by suitable adjustment of the swivel angles.

3. Infrared target-seeker head (1) according to Claim 1 or 2, **characterised in that** a catadioptric objective (10) with intermediate image formation is provided, **in that** the exit pupil, which is situated in the cold diaphragm of the detector, is capable of being transformed into the vicinity of the entrance lens, and **in that** a laser-screening filter, for example with layers of vanadium oxide, or an electrochromic filter is positioned in the intermediate image plane of said objective.

4. Infrared target-seeker head (1) according to Claim 3, **characterised in that** the characteristic radiation from the solid angle blocked by the subreflector of the catadioptric objective (10) is kept away from the detector (9) by a circular cold diaphragm being positioned in front of the detector (9).

5. Infrared target-seeker head (1) according to Claim 4, **characterised in that** the central covering of the cold diaphragm takes the form of an absorbing coating on the cold filter of the detector (9).

6. Infrared target-seeker head (1) according to one of the preceding claims, **characterised in that** the signals of the rate-of-rotation sensors (7, 8) on the roll gimbal (2) and on the camera are capable of being combined in such a manner that separate rates of roll, pitch and yaw for the optical axis are available.

7. Infrared target-seeker head (1) according to one of the preceding claims, **characterised in that** the image-processing computer is accommodated on the roll gimbal (2), so that a simple ring wheel is capable of being inserted between the roll gimbal (2) and the missile.

8. Infrared target-seeker head (1) according to one of the preceding claims, **characterised in that** the bearings of the swivel axis (4) are fastened parallel to the axis of the roll gimbal (2) in mobile manner with angle compensation and length compensation and **in that** motors are positioned on them which bring about an angular motion of the base axis perpendicular to the swivel axis (4).

9. Infrared target-seeker head (1) according to one of the preceding claims, **characterised in that** for the purpose of supplying the detector with cooling gas a toroidal compressed-gas cylinder is arranged on the roll gimbal (2).

10. Infrared target-seeker head (1) according to one of the preceding claims, **characterised in that** the exposure-time of the mosaic detector (9) can be adjusted to suitable values by the image-processing computer with the aid of suitable algorithms, for example on the basis of histograms.

11. A process for target tracking by means of the target-seeker head according to Claims 1 to 10, in which the rate of rotation about the swivel axis (4) and perpendicular thereto is measured by means of rate-of-rotation sensors (7), and the rate of rotation of the roll gimbal (2) is measured by means of rate-of-rotation sensors (8), and closed speed-control loops and open speed-control loops are set up which drive the motors of the swivel axis (4) and of the roll gimbal (2) in such a way that the swivel axis (4) can be adjusted to any direction within a solid angle which is symmetrical to the longitudinal axis of the missile and in such a way that it is decoupled from all the angular motions of the missile to such an extent that the motion of the target image in the image plane of the camera lens within the exposure-time of the camera (11) remains negligibly slight, **characterised in that**
use is made of a mosaic infrared detector (9) which detects the thermal energy radiated by a target, the output signals of said detector being fed into an image-processing computer,
**in that** the angular position of the swivel axis (4) is ascertained from the signal of the rate-of-rotation sensors (7, 8) and of the angle transmitters (5), so that angular motions of the optical axis that are not fully stabilised are compensated electronically or are taken into account in the creation of the target coordinates,
**in that** the seeker-head axis is no longer locked onto the target as soon as the longitudinal axis of the missile forms with the straight line connecting the missile and the target such a small angle that in the case of zero displacement of the swivel gimbal within the image field of the camera the target is imaged with sufficient spacing from the edge of the image field and
**in that** in this operating state the roll gimbal (2) is rotated in such a way that the swivel-gimbal axis (4) is perpendicular to the greatest instantaneous angular-velocity vector that is acting on the seeker head (1).

12. Process according to Claim 11, **characterised in that** defective points on the mosaic detector (9), which stem from manufacturing errors, from ageing or from destructive effects of enemy action, are ascertained and/or stored in the image-processing computer, so that the target image is kept away from these points by suitable adjustment of the swivel angles.

13. Process according to Claim 11 or 12, **characterised in that** use is made of a catadioptric objective (10) with intermediate image formation, the exit pupil, which is situated in the cold diaphragm of the detector, being transformed into the vicinity of the entrance lens, and a laser-screening filter, for example with layers of vanadium oxide, or an electrochromic filter being positioned in the intermediate image plane of said objective.

14. Process according to Claim 13, **characterised in that** the characteristic radiation from the solid angle blocked by the subreflector of the catadioptric objective (10) is kept away from the detector (9) by a circular cold diaphragm positioned in front of the detector (9).

15. Process according to Claim 14, **characterised in that** use is made of an absorbing coating on the cold filter of the detector (9) by way of central covering of the cold diaphragm.

16. Process according to one of Claims 11 to 15, **characterised in that** the signals of the rate-of-rotation sensors (7, 8) on the roll gimbal (2) and on the camera are combined in such a manner that separate rates of roll, pitch and yaw for the optical axis are available.

17. Process according to one of Claims 11 to 16, **characterised in that** an angular motion of the base axis perpendicular to the swivel axis (4) is brought about by the bearings of the swivel axis (4) which are fastened parallel to the axis of the roll gimbal (2) in mobile manner with angle compensation and length compensation and by motors positioned on them.

18. Process according to one of the Claims 11 to 17, **characterised in that** the exposure-time of the mosaic detector (9) is adjusted to suitable values by the image-processing computer with the aid of suitable algorithms, for example on the basis of histograms.

19. Process according to one of the Claims 11 to 18, **characterised in that** use is made of an image-processing computer, the algorithmic procedure of which is tolerant of image rotation.

20. Process according to Claim 19, **characterised in that** after a segmentation of the image content the further processing is implemented on a symbolic level (features level).

## Revendications

1. Autodirecteur à infrarouge (1) pour un missile comportant un système de cadres polaire à la manière d'un observatoire astronomique ou d'un théodolite, dans lequel l'axe de rotation (3) du cadre roulant (2) coïncide avec l'axe longitudinal du missile et l'axe de pivotement (4) de l'appareil de prise de vue est disposé perpendiculairement à ces axes, des capteurs angulaires (5) et des moteurs (6) étant montés sur l'axe de rotation (3) du cadre roulant (2) et sur l'axe de pivotement (4) et des capteurs de régime de rotation (7) sur l'axe de pivotement pour la mesure du régime de rotation inertiel autour de l'axe de pivotement (4) et perpendiculairement à ce dernier, et un capteur de régime de rotation (8) étant par ailleurs monté sur le cadre roulant (2) pour le régime de rotation inertiel du cadre (2), et des boucles d'asservissement et des boucles de commande de vitesse pouvant être établies à l'aide de ces capteurs de régime de rotation (7, 8), lesquelles commandent les moteurs de l'axe de pivotement (4) et du cadre roulant (2) de sorte que l'axe de pivotement (4) est réglable dans chaque direction à l'intérieur d'un angle solide symétrique par rapport à l'axe longitudinal du missile, et qu'il est découplé de tous les mouvements angulaires du missile au point que le déplacement de l'image de la cible dans le plan d'image de l'objectif de l'appareil de prise de vue reste négligeable pendant la durée d'exposition de l'appareil de prise de vue (11), **caractérisé en ce que**
- il est prévu un détecteur mosaïque à infrarouge (9) dont les signaux de sortie peuvent être injectés dans un ordinateur de traitement d'images,
- que la position angulaire de l'axe de pivotement (4) est déterminable à partir du signal des capteurs de régime de rotation (7, 8) et des capteurs angulaires (5) de sorte que des mouvements angulaires non stabilisés de l'axe optique sont compensés électroniquement ou pris en compte dans la formation des coordonnées de la cible,
- que l'axe de l'autodirecteur n'est plus orienté vers la cible dès que l'axe longitudinal du missile forme avec la droite de jonction missile-cible un angle si petit que la cible, pour une déviation du cadre pivotant nulle, peut être reproduite à l'intérieur du champ d'image de l'appareil de prise de vue (11) à une distance suffisante du bord de champ d'image et
- que dans cet état de fonctionnement, le cadre roulant (2) peut être tourné de sorte que l'axe (4) du cadre pivotant se situe perpendiculairement au vecteur de vitesse angulaire maximal momentané qui agit sur l'autodirecteur (1).

2. Autodirecteur à infrarouge (1) suivant la revendication 1, **caractérisé en ce que** des endroits défectueux sur le détecteur mosaïque (9) qui proviennent de défauts de fabrication, du vieillissement ou d'effets destructeurs hostiles, sont déterminables et/ou mémorisables dans l'ordinateur de traitement d'images, de sorte que l'image de la cible peut être tenue écartée de ces endroits par un réglage adéquat de l'angle de pivotement.

3. Autodirecteur à infrarouge (1) suivant l'une des revendications 1 et 2, **caractérisé en ce qu'**il est prévu un objectif catadioptrique (10) à image intermédiaire, que la pupille de sortie, qui se situe dans le diaphragme froid du détecteur, est transformable à proximité de la lentille d'entrée, et qu'un filtre de protection laser, par exemple comprenant des couches d'oxyde de vanadium, ou un filtre électrochrome est monté dans le plan d'image intermédiaire de l'objectif.

4. Autodirecteur à infrarouge (1) suivant la revendication 3, **caractérisé en ce que** le rayonnement propre de l'angle solide bloqué par le sub-réflecteur de l'objectif catadioptrique (10) est tenu écarté du détecteur (9) par le fait qu'un diaphragme froid en anneau de cercle est monté devant le détecteur (9).

5. Autodirecteur à infrarouge (1) suivant la revendication 4, **caractérisé en ce que** le cache central du diaphragme froid est configuré en tant que revêtement absorbant sur le filtre froid du détecteur (9).

6. Autodirecteur à infrarouge (1) suivant l'une des revendications précédentes, **caractérisé en ce que** les signaux des capteurs de régime de rotation (7, 8) sur le cadre roulant (2) et sur l'appareil de prise de vue sont combinables de telle sorte que des régimes séparés de roulis, de tangage et de lacet sont disponibles pour l'axe optique.

7. Autodirecteur à infrarouge (1) suivant l'une des revendications précédentes, **caractérisé en ce que** l'ordinateur de traitement d'images est logé sur le cadre roulant (2), de sorte qu'un simple joint tournant peut être mis en place entre le cadre roulant (2) et le missile.

8. Autodirecteur à infrarouge (1) suivant l'une des revendications précédentes, **caractérisé en ce que** les paliers de l'axe de pivotement (4) sont fixés de façon mobile avec compensation d'angle et de longueur parallèlement à l'axe du cadre roulant (2) et que sur ceux-ci sont montés des moteurs qui provoquent un mouvement angulaire de l'axe de base perpendiculairement à l'axe de pivotement (4).

9. Autodirecteur à infrarouge (1) suivant l'une des revendications précédentes, **caractérisé en ce qu'**une bouteille de gaz comprimé toroïdale est disposée sur le cadre roulant (2) pour l'alimentation du détecteur en gaz de refroidissement.

10. Autodirecteur à infrarouge (1) suivant l'une des revendications précédentes, **caractérisé en ce que** la durée d'exposition du détecteur mosaïque (9) est réglable à des valeurs adéquates par l'ordinateur de traitement d'images à l'aide d'algorithmes appropriés, par exemple à l'aide d'histogrammes.

11. Procédé de poursuite de cible au moyen de l'autodirecteur suivant les revendications 1 à 10, dans lequel le régime de rotation autour de l'axe de pivotement (4) et perpendiculairement à ce dernier est mesuré au moyen de capteurs de régime de rotation (7) et le régime de rotation du cadre roulant (2) est mesuré au moyen de capteurs de régime de rotation (8) et des boucles d'asservissement et des boucles de commande de vitesse sont établies, qui commandent les moteurs de l'axe de pivotement (4) et du cadre roulant (2) de sorte que l'axe de pivotement (4) est réglable dans chaque direction à l'intérieur d'un angle solide symétrique par rapport à l'axe longitudinal du missile et est découplé de tous les mouvements angulaires du missile au point que le déplacement de l'image de la cible dans le plan d'image de l'objectif de l'appareil de prise de vue reste négligeable pendant la durée d'exposition de l'appareil de prise de vue (11), **caractérisé en ce que**
- un détecteur mosaïque à infrarouge (9) est utilisé, lequel détecte l'énergie thermique rayonnée par une cible, ses signaux de sortie étant injectés dans un ordinateur de traitement d'images,
- que la position angulaire de l'axe de pivotement (4) est déterminée à partir du signal des capteurs de régime de rotation (7, 8) et des capteurs angulaires (5), de sorte que des mouvements angulaires non stabilisés de l'axe optique sont compensés électroniquement ou pris en compte dans la formation des coordonnées de la cible,
- que l'axe de l'autodirecteur n'est plus orienté vers la cible dès que l'axe longitudinal du missile forme avec la droite de jonction missile-cible un angle si petit que la cible, pour une déviation du cadre pivotant nulle, est reproduite à l'intérieur du champ d'image de l'appareil de prise de vue à une distance suffisante du bord de champ d'image et
- que dans cet état de fonctionnement, le cadre roulant (2) est tourné de sorte que l'axe du cadre pivotant (4) se situe perpendiculairement au vecteur de vitesse angulaire maximal momentané qui agit sur l'autodirecteur (1).

12. Procédé suivant la revendication 11, **caractérisé en ce que** des endroits défectueux sur le détecteur mosaïque (9) qui proviennent de défauts de fabrication, du vieillissement ou d'effets destructeurs hostiles, sont déterminés et/ou mémorisés dans l'ordinateur de traitement d'images, de sorte que l'image de la cible est tenue écartée de ces endroits par un réglage approprié de l'angle de pivotement.

13. Procédé suivant l'une des revendications 11 et 12, **caractérisé en ce qu'**un objectif catadioptrique (10) à image intermédiaire est utilisé, la pupille de sortie, qui se situe dans le diaphragme froid du détecteur, étant transformée à proximité de la lentille d'entrée, et un filtre de protection laser, par exemple comprenant des couches d'oxyde de vanadium, ou un filtre électrochrome étant monté dans le plan d'image intermédiaire de l'objectif.

14. Procédé suivant la revendication 13, **caractérisé en ce que** le rayonnement propre de l'angle solide bloqué par le sub-réflecteur de l'objectif catadioptrique (10) est tenu écarté du détecteur (9) par un diaphragme froid en forme d'anneau de cercle placé devant le détecteur (9).

15. Procédé suivant la revendication 14, **caractérisé en ce qu'**un revêtement absorbant sur le filtre froid du détecteur (9) est utilisé en tant que cache central du diaphragme froid.

16. Procédé suivant l'une des revendications 11 à 15, **caractérisé en ce que** les signaux des capteurs de régime de rotation (7, 8) sur le cadre roulant (2) et sur l'appareil de prise de vue sont combinés de telle sorte que des coefficients séparés de roulis, de tangage et de lacet sont disponibles pour l'axe optique.

17. Procédé suivant l'une des revendications 11 à 16, **caractérisé en ce qu'**un mouvement angulaire de l'axe de base perpendiculairement à l'axe de pivotement (4) est provoqué par les paliers de l'axe (4) fixés de façon mobile avec compensation d'angle et de longueur parallèlement à l'axe du cadre roulant (2) et par les moteurs montés sur ceux-ci.

18. Procédé suivant l'une des revendications 11 à 17, **caractérisé en ce que** la durée d'exposition du détecteur mosaïque (9) est réglée à des valeurs adéquates par l'ordinateur de traitement d'images à l'aide d'algorithmes appropriés, par exemple à l'aide d'histogrammes.

19. Procédé suivant l'une des revendications 11 à 18, **caractérisé en ce qu'**on utilise un ordinateur de traitement d'images dont l'algorithmique est tolérant vis-à-vis de la rotation d'image.

20. Procédé suivant la revendication 19, **caractérisé en ce que** le traitement ultérieur est réalisé sur un plan symbolique (plan de caractéristiques) après une segmentation du contenu d'image.
